# EUROPÄISCHE PATENTSCHRIFT

(11) **EP 0 423 527 B1**
(45) Veröffentlichungstag und Bekanntmachung des Hinweises auf die Patenterteilung: **11.09.1996**
(21) Anmeldenummer: 90118774.0
(22) Anmeldetag: 29.09.1990
(51) Int. Cl.: B01D 63/08

(54) **Vorrichtung zur Trennung von Stoffgemischen mit voneinander beabstandeten, gestapelten Membranelementen**
Device for the separation of mixtures with stacked membranes spaced from each other
Dispositif pour la séparation de mélanges constitué par un empilement de membranes espacées les unes des autres

(30) Priorität: 17.10.1989 DE 3934509
(43) Veröffentlichungstag der Anmeldung: 24.04.1991
(73) Patentinhaber: GKSS-FORSCHUNGSZENTRUM GEESTHACHT GMBH, D-21502 Geesthacht (DE)
(72) Erfinder: Hilgendorff, Walter, Dipl.-Ing., W-2121 Tespe (DE); Kahn, Gerhard, W-2054 Geesthacht (DE)
(74) Vertreter: Niedmers, Ole, Dipl.-Phys.

(56) Entgegenhaltungen:
- DE-A- 2 603 505
- FR-A- 2 615 750
- GB-A- 2 012 614

## Beschreibung

Die Erfindung betrifft eine Vorrichtung zur Trennung von Stoffgemischen mittels über Außen- und Innenringe umfassenden Stützrahmen voneinander beabstandeter, gestapelter Membranelemente, die eine Bohrung zum Abfluß des Permeats aufweisen, welche eine Zuführung des Stoffgemisches zur Vorrichtung und eine Abführung für das Retentat sowie des Permeats umfaßt, wobei die Membranelemente in zwischen Außen- und Innenring gebildeten Stoffgemischkammern vom Stoffgemisch von deren Oberfläche im wesentlichen flächig angeströmt werden und bei gleichbleibend wirksamer Membranfläche die Strömungsquerschnitte der Stoffgemischkammern vom Eintritt zum Austritt des Membranelementstapels reduziert oder erweitert werden.

Eine Vorrichtung dieser Art ist bekannt (DE-PS 35 07 908). Diese bekannte Vorrichtung wurde unter der Prämisse entwickelt, daß die Bildung von Deckschichten auf den flüssigkeitsselektiven Schichten der Membranelemente, die die Trennleistung der Membranelemente vermindern, vermindert, wenn nicht gar vollständig verhindert wird. Theoretische Untersuchungen haben gezeigt, daß die Bildung von Deckschichten auf den flüssigkeitsselektiven Oberflächen von Membranelementen in erheblichem Maße von der Wandschubspannung beeinflußt wird (Kulozik, Einflüsse auf die Permeation von Wasser und gelösten Stoffen sowie auf den Deckschichtabtrag bei der Umkehrosmose, Fortschrittberichte VDI Verlag, Düsseldorf 1986). Da sich die Wandschubspannung mit dem Quadrat der Strömungsgeschwindigkeit einer Flüssigkeit ändert, muß auch innerhalb einer gattungsgemäßen Vorrichtung zur Trennung flüssiger Stoffgemische dafür gesorgt werden, daß eine gleichbleibende Geschwindigkeit der zu trennenden Flüssigkeit in der Vorrichtung von der Zuführung des Stoffgemisches bis zur Abführung gewährleistet ist. In der eingangs erwähnten bekannten Vorrichtung wird dieser Forderung dadurch Sorge getragen, daß die Stoffgemischkammern, die das zu trennende Stoffgemisch von der Zuführung bis zur Abführung aus der Vorrichtung heraus durchläuft, derart unterschiedlich ausgebildet sind, daß deren Strömungsquerschnitte von der Zuführung bis zur Abführung reduziert werden, so daß die Strömungsgeschwindigkeit des Stoffgemisches innerhalb der Vorrichtung gemäß der oben erwähnten Forderung konstant gehalten wird. D. h. mit anderen Worten, daß der Querschnitt der Strömungskanäle des Stoffgemisches in dem Maße reduziert wird, wie die Menge des zu behandelnden Stoffgemisches durch die Permeatentnahme abnimmt.

Bei der bekannten Vorrichtung wird diese Verringerung des Strömungsquerschnittes dadurch erreicht, daß die Außen- und Innenringe des die Membranelemente tragenden Stützrahmens in ihrer Dicke variiert werden, so daß dadurch die lichte Weite der Stoffgemischkammern variiert wird.

Es hat sich gezeigt, daß die bekannte Vorrichtung aufgrund einer Vielzahl bezüglich ihrer Dicke unterschiedlich ausgebildeter Außen- und Innenringe eine nur sehr aufwendig und damit kostspielig gefertigt werden kann und auch eine Lagerhaltung auf seiten der Hersteller verhältnismäßig kostspielig ist, mit der Folge, daß die Vorrichtung nur unter verhältnismäßig hohen Kosten herstellbar und bereitstellbar ist.

Das hat seinen Grund im wesentlichen darin, daß die Außen- und Innenringe des Stützrahmens in Spritzgußtechnik hergestellt werden und für jede unterschiedliche Dicke der Außen- und Innenringe jeweils eine gesonderte Spritzgußform hergestellt werden muß. Die Kosten für die Herstellung einer Spritzgußform dieser Art belaufen sich auf ca. 30.000,-- DM, so daß allein an Kosten zur Herstellung der Spritzgußformen sechs- und mehrstellige Beträge bereitgestellt werden müssen, um derartige bekannte Vorrichtungen herstellen zu können.

Ein weiteres erhebliches Problem ist die eigentliche Fertigung und Lagerung der bisher erforderlichen Vielzahl von Außen- und Innenringen unterschiedlicher Dicke zur Ausbildung einer gattungsgemäßen Vorrichtung.

Schließlich ist bei der bekannten Vorrichtung auch höchste Sorgfalt bei der Montage erforderlich, so daß Vorrichtungen dieser Art nur von fachlich qualifizierten Personen montiert werden konnte.

Es ist Aufgabe der vorliegenden Erfindung, eine Vorrichtung der eingangs genannten Art zu schaffen, die bei ansonsten gleicher oder größerer Trennleistung wie die bekannte Vorrichtung einfacher im Aufbau ist und sehr viel kostengünstiger bereitgestellt werden kann, die die Möglichkeit zur Verringerung der Lagerhaltung und damit ebenfalls eine kostengünstigere Bereitstellbarkeit schafft, wobei die Montage der Einzelteile der Vorrichtung gegenüber der bekannten Vorrichtung erleichtert werden soll, so daß diese auch durch fachlich ungeschulte Personen durchgeführt werden kann.

Gelöst wird die Aufgabe gemäß der Erfindung dadurch, daß alle Außen- und Innenringe des Membranelementstapels gleiche Abmaße haben und die unterschiedlichen Strömungsquerschnitte in den Stoffgemischkammern wenigstens durch Variation der Dicke der Membranelemente einstellbar sind.

Der Vorteil der Erfindung liegt im wesentlichen darin, daß die einzelnen Membranelemente,da sie im Vergleich zu den Außen- und Innenringen kostenmäßig nur eine untergeordnete Stellung in den Gesamtgestehungskosten der Vorrichtung spielen, ohne großen apparativen Aufwand unterschiedlich dick ausgebildet werden können, so daß allein durch diese Maßnahme die zwischen zwei Membranelementen eines Membranelementstapels einer Vorrichtung gebildete Stoffgemischkammern in bezug auf ihre Strömungsquerschnitte leicht variierbar, d. h. in Abhängigkeit der Dicke des Membranelements eingestellt werden können.

Gemäß einer vorteilhaften Ausgestaltung der Vorrichtung sind die Membranelemente als Kissenelemente ausgebildet, wobei zwischen zwei äußeren flächigen selektiven Membranen eine flächige Einlage variierbarer Dicke angeordnet ist. Bei dieser Ausgestaltung des Membranelements bleiben die flächigen Membranen des Membrankissens immer in bezug auf ihre Abmessungen gleich, während in Abhängigkeit der gewünschten Verminderung des Strömungsquerschnitts die Einlage zwischen den Membranen variiert wird, wobei dieses im Zuge der Herstellung der Membrankissen ohne jede Schwierigkeit und ohne jeden zusätzlichen Aufwand geschehen kann.

Es sei erwähnt, daß die erfindungsgemäße Vorrichtung aber nicht nur mit als Kissenmembranen ausgebildeten Membranelementen im eingangs beschriebenen Sinne funktioniert, sondern daß der Begriff "Membranelement" auch prinzipiell lediglich eine selektive flächige Membran umfaßt, die auf einer ebenfalls flächigen Stützscheibe aufliegt. Eine Variation der Strömungsquerschnitte der Stoffgemischkammern bei dieser Ausgestaltung des Membranelements wird auf einfache Weise dadurch erreicht, daß die flächigen Stützscheiben wiederum in bezug auf ihre Dicke, je nach Erfordernis, variierbar sind. In diesem Zusammenhang sei erwähnt, daß flächige Stützscheiben aber auch zusätzlich oder anstelle der vorangehend erwähnten flächigen Einlagen in als Kissenmembranen ausgebildeten Membranelementen Verwendung finden können und dort vorteilhafterweise in bezug auf ihre Dicke im Sinne der Erfindung zur Einstellung unterschiedlicher Strömungsquerschnitte ebenfalls variierbar ausgebildet sein können.

Schließlich ist es vorteilhaft in der bzw. den Stoffgemischkammern im wesentlichen flächig und im wesentlichen parallel zu den Membranelementen ausgebildete turbulenzerzeugende Platten vorzusehen, die einerseits zur Einstellung unterschiedlicher Strömungsquerschnitte wiederum unterschiedliche Dicken aufweisen können und die generell zur Verminderung der Strömungsquerschnitte in der Stoffgemischkammer, wenn eine derartige Verminderung nötig ist, vorgesehen werden können, während diese entfallen können, wenn an anderer Stelle der Vorrichtung in anderen Stoffgemischkammern eine Verringerung der Strömungsquerschnitte nicht erforderlich ist.

Für bestimmte Anwendungsfälle kann es vorteilhaft sein, insbesondere wenn der Permeatsaustrittsquerschnitt aus der Bohrung in der Membran groß sein soll, um beispielsweise den Austrittswiderstand des Permeats zu verringern, vorzugsweise jeweils im Bereich zwischen zwei Inneneinrichtungen einen Drainagering mit einer Mehrzahl radialer Öffnungen für den Durchtritt des Permeats zwischen den Membranen, die die Kissenmembran beidseitig begrenzen, einzuschließen. Mit Hilfe des Drainagerings ist auch der erleichterte Einbau unterschiedlich dicker Membranelemente bzw. Kissenmembranen möglich, da der Bereich der Membranen zwischen dem Innenringbereich dadurch immer eine vorbestimmte axiale Dicke aufweist.

Um insbesondere den Permeatsaustrittsquerschnitt bis zur Bohrung für den Austritt des Permeats zu vergrößern, sind die erwähnten radialen Öffnungen für den Durchtritt des Permeats vorgesehen. Der vergrößerte Permeataustrittsquerschnitt ist besonders dann ein Vorteil, wenn, wie im Falle der Gasseparation und der Pervaporation, das Permeatsystem mit Unterdruck betrieben wird und damit das Volumen des Permeats zunimmt und somit auch einen größeren Raum benötigt.

Der Drainagering ist schließlich vorzugsweise aus zwei im wesentlichen gleichgestalteten Ringteilen ausgebildet, die miteinander durch Klippeinrichtungen verklippbar sind, so daß diese extrem kostengünstig hergestellt werden können, da nur eine Spritzgußform zu deren Herstellung erforderlich ist, und es wird die Montage wesentlich erleichtert, da diese zur Bildung eines fertigen Drainageringes lediglich axial aufeinander gesteckt zu werden brauchen, und zwar ggf.unter Einschluß des Randbereiches des Innenloches einer Stützscheibe, auf der die Membran aufliegt bzw. die von den beiden Membranen einer Kissenmembran eingeschlossen ist.

Die Erfindung wird nun unter Bezugnahme auf die schematischen Zeichnungen anhand eines Ausführungsbeispieles eingehend beschrieben. Diese zeigen:
- Fig. 1: im Schnitt in einer ausschnitthaften Darstellung eine Hälfte von scheibenförmig ausgebildeten Membranelementen sowie Außen- und Innenringe, die die Membranelemente und turbulenzerzeugende Platten sowie Dichtelemente einschließen und
- Fig. 2: in der Draufsicht einen Teil des zweiteiligen Drainageringes.

Die Vorrichtung 10 besteht im wesentlichen aus Stützrahmen, die durch einen Außenring 110 und einen Innenring 111 gebildet werden, wobei ein Membranelement 12 jeweils zwischen zwei Außenringen 110 und zwei Innenringen 111 eingeschlossen ist. Zwischen zwei Membranelementen 12 wird jeweils eine Stoffgemischkammer 14 gebildet. Die den Stützrahmen 11 bildenden Außenringe 110 und Innenringe 111 weisen untereinander alle einen gleichen Aufbau auf, d. h. sie können in einer Spritzgußform für den Außenring 110 und in einer Spritzgußform für den Innenring 111 gefertigt werden.

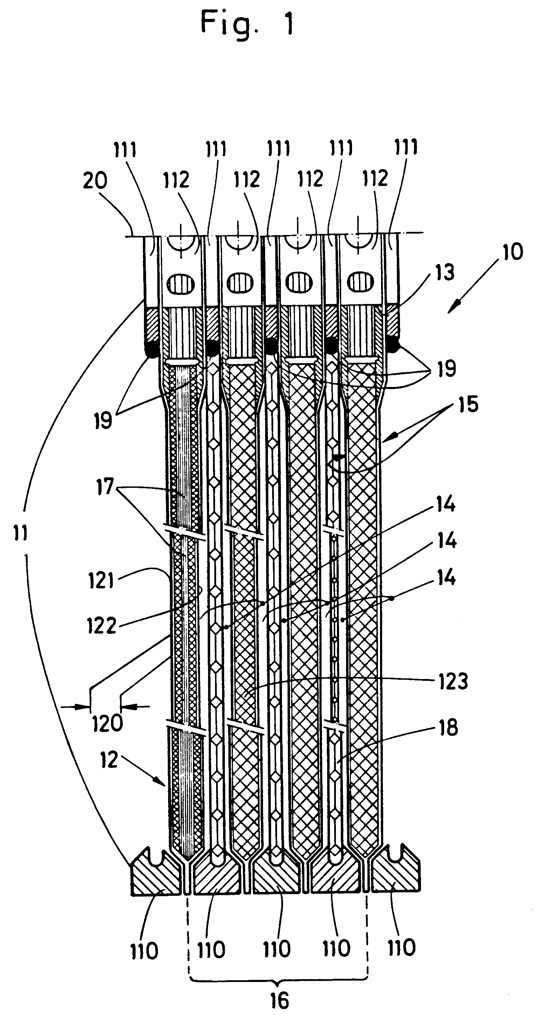

Eine vorbestimmte Mehrzahl an Membranelementen 12 mit dazugehörigen Außen- und Innenringen 110, 111 bildet einen Membranstapel 16, wie er beispielsweise in der Figur 1 dargestellt ist, wobei die Darstellung der Fig. 1 lediglich beispielhaft anzusehen ist. Grundsätzlich weist die Vorrichtung 10 ansonsten einen Aufbau auf, wie er in der DE-PS 35 07 908 beschrieben wird, insbesondere was den Fluß des zu trennenden Stoffgemisches, das sowohl flüssig als auch gasförmig sein kann, den Fluß des Retentates und den des Permeates in der Vorrichtung 10 angeht, so daß auf die vorgenannte Patentschrift Bezug genommen wird. Es sei aber erwähnt, daß das zu trennende flüssige Stoffgemisch mäanderförmig die einzelnen Stoffgemischkammern 14 von der Zuführung zur Abführung der Vorrichtung 10 durchfließt und dabei im wesentlichen parallel und flächig die Membranelementoberfläche 15 umstreift. Das die Membran 121, 122 des hier beispielhaft dargestellten Membranelements in Form eines sogenannten Kissens (Kissenmembran) passierende Permeat gelangt in den Bereich zwischen zwei Innenringen 111, verläßt die Kissenmembran durch die Bohrung 13 und wird von dort zu einem die Vorrichtung 10 verlassenden Permeatabfluß geführt.

Die Membranelemente 12 sind im Bereich des Innenringes 111, der hier zur Vereinfachung lediglich in bezug auf eine Vorrichtungsachse 20 hälftig dargestellt ist, auf bekannte Weise gegeneinander über Dichtungen 19, die beispielsweise O-Ringe sein können, abgedichtet.

Wie schon erwähnt, sind die hier dargestellten Membranelemente 12 in Form sogenannter Kissenmembranen ausgebildet, d. h. zwischen zwei äußeren Membranen 121, 122, die in ihrem äußeren Randbereich, der zu den Außenringen 110 zeigt, durch Schweißung oder dgl. dicht miteinander verbunden sind, fließt das Permeat in Richtung der Bohrung 13 ab. Zwischen den Membranen 121, 122 ist eine Einlage 123 angeordnet, die zur Erreichung unterschiedlicher Strömungsquerschnitte in den Stoffgemischkammern in ihrer Dicke variiert werden kann, so daß die Gesamtdicke des Membranelements 12 einstellbar ist, da durch Dickenvariation der Membranelemente 12 die Stoffgemischkammer 14 zwischen zwei Membranelementen in bezug auf ihren Strömungsquerschnitt einstellbar ist.

Zusätzlich oder alternativ zu der Einlage 122 kann zwischen den Membranen 121, 122 auch eine Stützscheibe 17 untergebracht werden, deren Dicke ebenfalls zur Einstellung der Dicke der Membranelemente variiert werden kann.

Schließlich kann auch zwischen zwei Membranelementen 12 in der dort ausgebildeten Strömungskammer 14 eine turbulenzerzeugende Platte 18 angeordnet sein, die grundsätzlich die unerwünschte Ablagerung von Materialien, die im flüssigen Stoffgemisch enthalten sind, in Form von Deckschichten auf der Membranelementoberfläche 15 verhindern soll und gleichzeitig für eine gute Verteilung des flüssigen Stoffgemisches auf der Membranelementoberfläche 15 sorgen soll. Zur Einstellung des Strömungsquerschnittes in der Stoffgemischkammer 14 kann somit ebenfalls die turbulenzerzeugende Platte 18 dienen, die bei variierbarer Dicke für eine Variation des Strömungsquerschnittes in der Stoffgemischkammer 14 sorgt, so daß diese stromungsquerschnittverändernde Maßnahme zusammen mit der Variation der Dicke der Einlage 123 im Membranelement 12 und der Variation der Dicke der Stützscheibe 17 im Membranelement 12 eine vielfache Möglichkeit der Einstellung des Strömungsquerschnittes in den Stoffgemischkammern 14 der Vorrichtung 10 bietet.

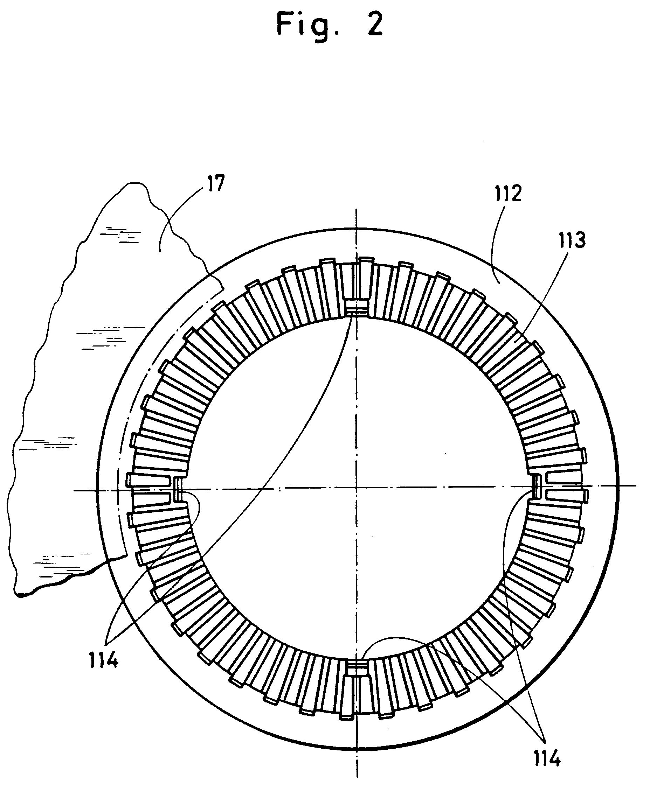

In Fig. 2 ist ein Ringteil eines Drainagerings 112 dargestellt, wobei der montierte Drainagering, vgl. Fig. 1, aus zwei im wesentlichen gleichen Ringteiten besteht, die miteinander durch Klippeinrichtungen 114 verklippbar sind. Der Drainagering 112 ist bei bestimmten Ausgestaltungen der Vorrichtung 10, bei denen es auf einfache Montage unterschiedlich dicker Membranelemente 12 ankommt, jeweils im Bereich zwischen zwei Innenringen 111 vorgesehen, wobei der Durchmesser des Drainageringes 112 wenigstens geringfügig größer als der Durchmesser der Innenringe 111 ist. Für den Durchtritt des Permeats weist der Drainagering 112 eine Mehrzahl radialer Öffnungen 113 auf. Der Drainagering 112 besteht aus zwei im wesentlichen gleichgestalteten Ringteilen, die miteinander durch Klippeinrichtungen 114 leicht verbindbar sind. Zwischen zwei Ringteilen des Drainagerings 112 ist am Außenumfang beispielsweise eine Stützscheibe 17 im Bereich ihrer Innenbohrung eingeschlossen, vgl. die strichpunktierte Linie von Fig. 2.

Die in der Fig. 1 dargestellten Außenringe und Innenringe 110, 111 sind dort als gesonderte Teile dargestellt. Es ist aber auch möglich, die Außenringe 110 und/oder Innenringe 112 einstückig beispielsweise über eine dünne Platte, die im wesentlichen parallel zum Membranelement liegt, auszubilden, was hier im einzelnen nicht dargestellt ist. Auf diese Weise können die Kosten für die Herstellung einer Vorrichtung gegenüber dem einzelnen Aufbau der Außen- und Innenringe 110, 111 noch einmal verringert werden, da für eine derartige Ausgestaltung lediglich nur noch eine Spritzgußform nötig ist.

Alle diese vorangehend vorgeschlagenen, beschriebenen Maßnahmen zeichnen sich gegenüber den eingangs beschriebenen Maßnahmen zur Änderung der Strömungsquerschnitte in den Stoffgemischkammern 14 dadurch aus, daß sie mit sehr viel geringerem apparativen und finanziellen Aufwand realisiert werden können, da alle die vorangehend aufgeführten Teile der Vorrichtung 10 als Massenartikel verhältnismäßig einfach hergestellt und bereitgestellt werden können mit der Folge einer verhältnismäßig einfachen und kostengünstigen Lagerhaltung.

## Patentansprüche

1. Vorrichtung (10) zur Trennung von Stoffgemischen mittels über Außen- und Innenringe (110, 111) umfassende Stützrahmen (11) voneinander beabstandeter, gestapelter Membranelemente (12), die eine Bohrung (13) zum Abfluß eines Permeats aufweisen, wobei die Vorrichtung (10) eine Zuführung des Stoffgemisches und eine Abführung für das Retentat sowie des Permeats umfaßt, und wobei die Membranelemente (12) in zwischen Außen- und Innenring (110, 111) gebildeten Stoffgemischkammern (14) vom Stoffgemisch an deren Oberflächen (15) im wesentlichen flächig angeströmt werden und bei gleichbleibend wirksamer Membranfläche die Strömungsquerschnitte der Stoffgemischkammern (14) vom Eintritt zum Austritt des Membranelementstapels (16) reduziert oder erweitert werden, dadurch gekennzeichnet, daß alle Außen- und Innenringe (110, 111) des Membranelementstapels (16) gleiche Abmaße haben und die unterschiedlichen Strömungsquerschnitte in den Stoffgemischkammern (14) wenigstens durch Variation der Dicke (120) der Membranelemente (12) einstellbar sind.

2. Vorrichtung nach Anspruch 1, dadurch gekennzeichnet, daß das Membranelement (12) als Kissenmembran ausgebildet ist, die zwischen zwei äußeren flächigen Membranen (121, 122) eine flächige Einlage (123) variierbarer Dicke umfaßt.

3. Vorrichtung nach einem oder beiden der Ansprüche 1 oder 2, dadurch gekennzeichnet, daß das Membranelement (12) auf flächigen Stützscheiben (17) variierbarer Dicke aufliegt.

4. Vorrichtung nach einem oder beiden der Ansprüche 2 oder 3, dadurch gekennzeichnet, daß eine flächige Stützscheibe (17) variierbarer Dicke zwischen den beiden äußeren flächigen Membranen (121, 122) einer Kissenmembran angeordnet ist.

5. Vorrichtung nach einem oder mehreren der Ansprüche 1 bis 4, dadurch gekennzeichnet, daß in der Stoffgemischkammer (14) im wesentlichen flächig und im wesentlichen parallel zu den Membranelementen (12) ausgebildete turbulenzerzeugende Platten (18) ausgebildet sind.

6. Vorrichtung nach einem oder mehreren der Ansprüche 2 bis 5, dadurch gekennzeichnet, daß jeweils im Bereich zwischen zwei Innenringen (111) ein Drainagering (112) mit einer Mehrzahl radialer Öffnungen (113) für den Durchtritt des Permeats zwischen den Membranen (121, 122) eingeschlossen ist.

7. Vorrichtung nach Anspruch 6, dadurch gekennzeichnet, daß der Drainagering (122) aus zwei im wesentlichen gleichgestalteten Ringteilen besteht, die mitander durch Klippeinrichtungen (114) verbindbar sind.

## Claims

1. Device (10) for the separation of mixed materials by means of a series of membrane elements (12) set apart from one another and held in a supporting frame (11) comprising outer and inner rings (110, 111), which membrane elements have a hole (13) for the draining of permeate, the device (10) having a feed arrangement for the mixed material and a discharge arrangement for the retentate as well as the permeate, while the mixed material washes directly against the surfaces (15) of the membrane elements (12) in material mixture chambers (14) formed between the outer and inner ring (110, 111), it being possible given constant membrane efficiency to reduce or increase the flow cross-sections of the material mixture chambers (14) between the entry and exit of the membrane element series (16), characterized in that all the inner and outer rings (110, 111) of the membrane element series (16) have the same dimensions and the different flow cross-sections in the material mixture chambers (14) can at least be adjusted by varying the thickness (120) of the membrane elements (12).

2. Device according to Claim 1, characterized in that the membrane element (12) is in the form of a cushion membrane, which has a flat insert (123) of variable thickness between two flat outer membranes (121, 122).

3. Device according to one or both of Claims 1 or 2, characterized in that the membrane element (12) rests on flat supporting discs (17) of variable thickness.

4. Device according to one or both of Claims 2 or 3, characterized in that a flat supporting disc (17) of variable thickness is disposed between the two flat outer membranes (121, 122) of a cushion membrane.

5. Device according to one or more of Claims 1 to 4, characterized in that in the material mixture chamber (14) turbulence-creating plates (18) are formed which are substantially flat and substantially parallel to the membrane elements (12).

6. Device according to one or more of Claims 2 to 5, characterized in that in each case a drainage ring (112) with several radial openings (113) for the passage of the permeate between the membranes (121, 122) is enclosed in the area between two inner rings (111).

7. Device according to Claim 6, characterized in that the drainage ring (122) is composed of two substantially identically formed ring sections, which may be connected to one another by clips (114).

## Revendications

1. Dispositif (10) pour la séparation de mélanges au moyen d'un empilement de membranes (12) espacées les unes des autres par un cadre de support (11) entourant des bagues externes et internes (110, 111) qui comportent un trou (13) pour l'écoulement d'un perméat, dans lequel le dispositif (10) comprend une alimentation en mélange et une évacuation destinée au rétentat, de même qu'au perméat, et dans lequel les membranes (12) présentes dans les chambres de mélange (14) formées entre les bagues externes et internes (110, 111) sont attaquées d'une manière essentiellement plane par le mélange au niveau de la surface (15) des chambres et, tandis que les surfaces membranaires conservent une efficacité inchangée, les sections de passage des chambres de mélange (14) diminuent ou s'élargissent de l'entrée vers la sortie des empilements de membranes (16), caractérisé par le fait que toutes les bagues internes et externes (110, 111) des empilements de membranes (16) comportent le même espacement et par le fait que les différentes sections de passage formées dans les chambres (14) sont réglables au moins à travers la variation de l'épaisseur (120) des membranes (12).

2. Dispositif selon la revendication 1, caractérisé par le fait qu'il est donné à la membrane (12) une forme de coussin, celle-ci comprenant, entre deux autres membranes planes, (121, 122) une garniture plane (123) d'épaisseur variable.

3. Dispositif selon l'une ou les deux des revendications 1 ou 2, caractérisé par le fait que la membrane (12) repose sur des disques de support plans (17) d'épaisseur variable.

4. Dispositif selon l'une ou les deux des revendications 2 ou 3, caractérisé par le fait qu'un disque de support plan (17) d'épaisseur variable est disposé entre les deux autres membranes planes (121, 122) d'une membrane en forme de coussin.

5. Dispositif selon l'une ou plusieurs des revendications 1 à 4, caractérisé par le fait que, dans les chambres de mélange (14), sont formées de manière essentiellement plane et parallèle aux membranes (12) des plaques produisant des turbulences (18).

6. Dispositif selon l'une ou plusieurs des revendications 2 à 5, caractérisé par le fait que, dans chaque espace séparant deux bagues internes (111), est enfermée une bague de drainage (112) pourvue d'une pluralité d'ouvertures radiales (113) destinées au passage du perméat entre les membranes (121, 122).

7. Dispositif selon la revendication 6, caractérisé par le fait que la bague de drainage (122) est constituée de deux parties de bague essentiellement identiques qui peuvent être reliées entre elles par des dispositifs de fixation.
